# EUROPEAN PATENT APPLICATION

(11) **EP 4 810 177 A1**
(43) Date of publication of application: **23.09.2026**
(21) Application number: 25164896.0
(22) Date of filing: 19.03.2025
(51) Int. Cl.: B21D 28/00, B21D 28/34, B25F 5/00, B26F 1/34, B26F 1/38

(54) **A PORTABLE ELECTRIC KNOCKOUT PUNCH**

(71) Applicant: Black & Decker, Inc., New Britain, CT 06053 (US)
(72) Inventor: HEEP, Tobias, 65589, Steinbach (DE); KRISCHE, Fridtjof, 55122, Mainz (DE); KADLECEK, Daniel, 65474 Bischofsheim (DE)
(74) Representative: SBD IPAdmin

(57) **Abstract**

A portable electric knockout punch comprising: an electric motor; a hole forming mechanism having a support portion for cooperating with a die and a punch portion for cooperating with a stamp wherein the hole forming mechanism is operatively coupled to the electric motor for causing axial displacement of the punch portion relative to the support portion between a home position and an active position for forming a hole in sheet metal; a home position sensor for generating output indicative that the punch portion has reached the home position during a reset stage of operation in which the punch portion is moved towards the home position; and a controller for receiving motor turn information indicative of the number of turns of the electric motor and for controlling axial movement of the punch portion in use based only on the motor turn information and the output generated by the home position sensor.

## Description

### Field

The present disclosure relates to a portable electric knockout punch for creating holes in sheet metal.

### Background

During sheet metal working it is sometimes necessary to form circular holes with specific dimensions to a high degree of precision. Hydraulic knockout punches are known for such purpose which draw a stamp located on one side of a sheet metal piece towards and subsequently into a die located on the other side of the sheet metal piece. It is known to rely on sensors to determine the position of movable internal components within tools. However, depending on multiple sensors to monitor the position of a specific internal component increases risk of tool failure because the likelihood of sensor failure increases with the number of sensors used.

### Summary

According to the present disclosure there is provided a portable electric knockout punch according to claim 1 wherein optional features thereof are defined in the dependent claims.

### Brief Description of the Drawings

Various other aspects and further examples are also described in the following detailed description and in the attached claims with reference to the accompanying drawings, in which:
Fig. 1 is a side view of a portable electric knockout punch;
Fig. 2 illustrates a die and stamp for use with the portable electric knockout punch of Fig. 1;
Figs. 3 to 7 illustrate the portable electric knockout punch of Fig. 1 at various stages during a hole forming operation;
Fig. 8 is a cross-sectional view of the portable electric knockout punch in Fig. 1;
Fig. 9 is a cross-sectional view through the portable electric knockout punch in Fig. 8 through the axis A-A;
Fig. 10 is a cross-sectional view through the portable electric knockout punch in Fig. 8 through the axis B-B;
Fig. 11a shows an exploded view of a component of the portable electric knockout punch in Fig. 8;
Fig. 11b shows the component in Fig. 11a in assembled form;
Fig. 12 illustrates another embodiment of the portable electric knockout punch;
Fig. 13 illustrates a cross-sectional view of the tool in Fig. 12 through the axis A-A;
Fig. 14 shows a schematic drawing of the portable electric knockout punch in Fig. 8;
Fig. 15 shows a flow diagram showing the operation of the portable electric knockout punch in

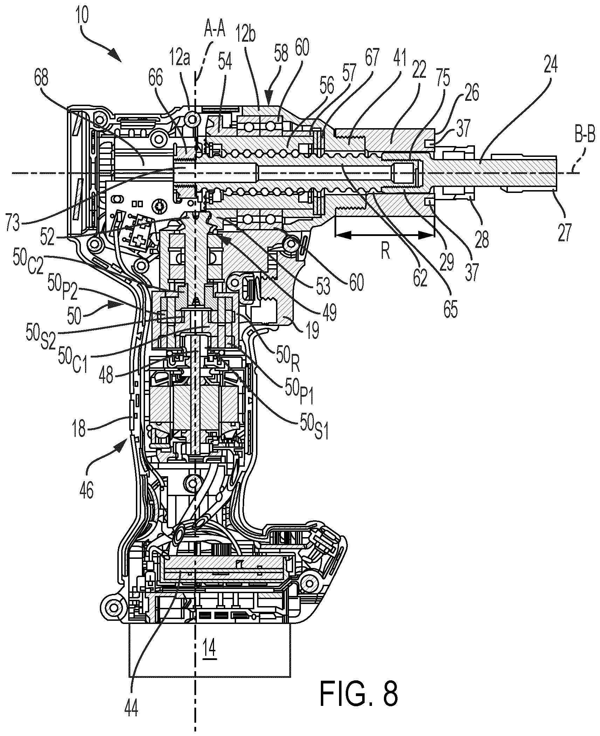

Fig. 8 according to a first example;

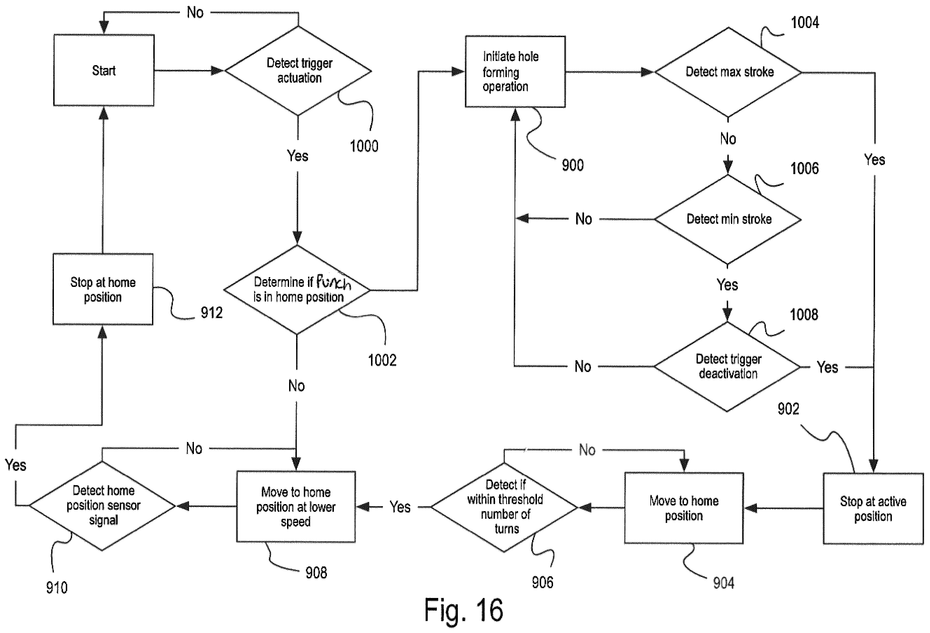

Fig. 16 shows a flow diagram showing the operation of the portable electric knockout punch in
Fig. 8 according to a second example; and

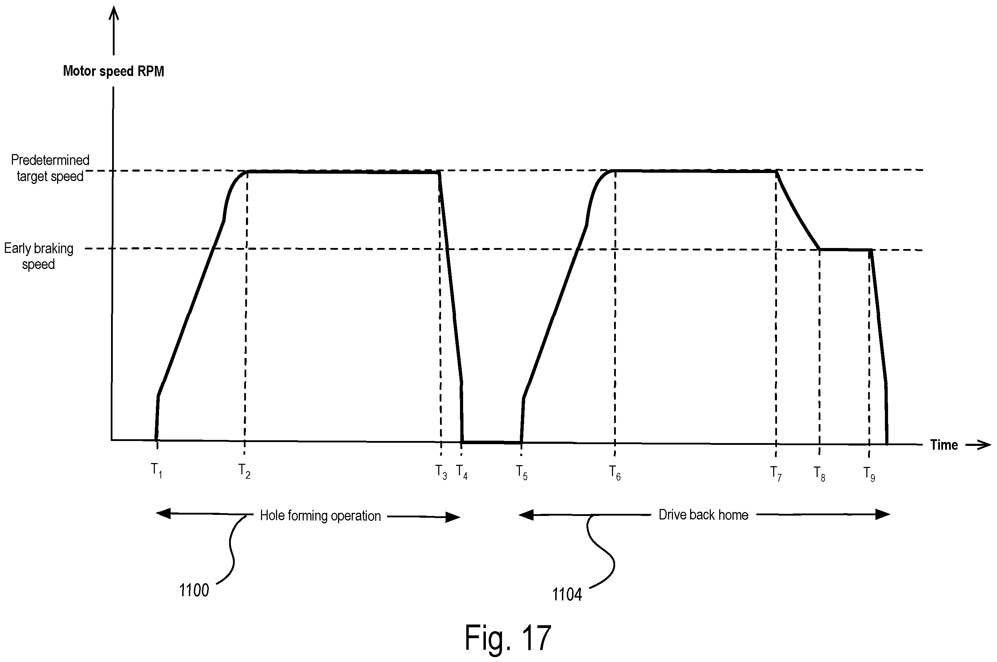

Fig. 17 shows a graph of motor speed versus time of the portable electric knockout punch in use.

### Detailed Description

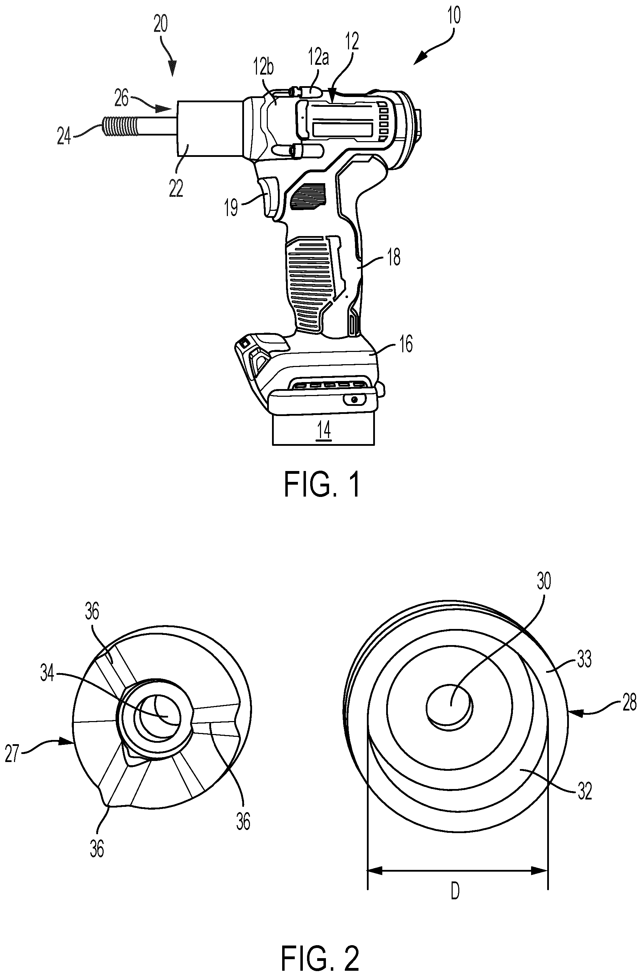

Fig. 1 shows a side cross-sectional view of a portable electric knockout punch 10. The tool 10 has a housing 12 part of which is formed of a plastic clam shell type construction 12a having two halves which are fastened together. A battery 14 is releasably connected to the base 16 of the handle 18 via a battery attachment feature. A trigger 19 is also provided.

The portable electric knockout punch 10 has an electric motor 46 located within the handle 18 whereby a user's hand surrounds the motor 46 when gripping the handle 18. The electric motor 46 has a motor output shaft 48 which extends along a first longitudinal axis A-A (best shown in Fig. 8) along the length of the handle 18.

The portable electric knockout punch 10 has a hole forming mechanism 20 which is mounted to the second housing part 12b in a manner described later. The hole forming mechanism 20 is for forming a hole in sheet metal. A support portion 22 of the hole forming mechanism 20 is fixed relative to the tool housing 12, specifically to a metal part 12b of the housing 12. The support portion 22 defines an opening through itself and thus has an annular support surface 26 which faces away from the portable electric knockout punch 10 to the left in Fig. 1. A punch portion 24 of the hole forming mechanism 20 is moveable relative to the tool housing 12. The punch portion 24 is rod-like in shape and extends through the opening defined by the support portion 22. A distal end of the rod-like punch portion 24 is threaded in order to threadably engage with a stamp 27.

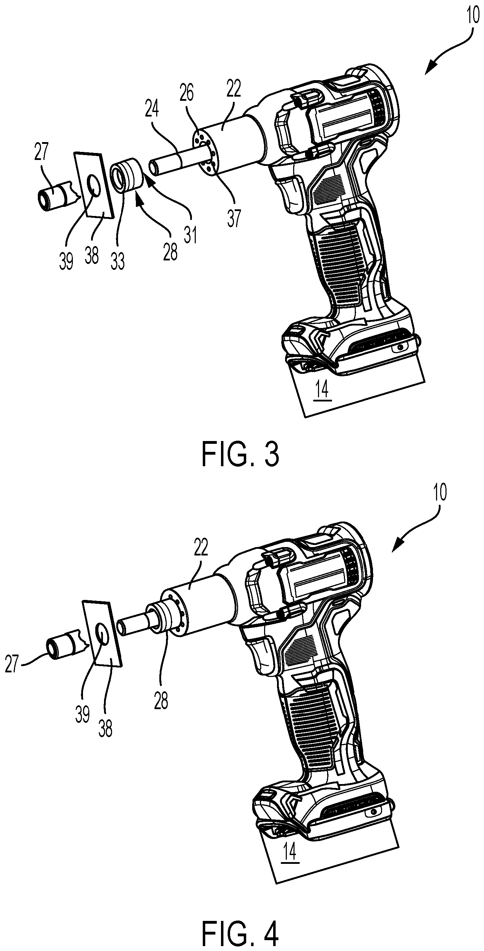

Fig. 2 shows a die 28 and stamp 27 suitable for use with the portable electric knockout punch 10. With additional reference to Fig. 3 the die 28 is essentially cylindrical. One end of the die 28 defines a first opening 30 and thus first annular surface 31, the first opening 30 being configured to form a snug fit with the punch portion 24. The other end of the die 28 defines a second opening 32 of diameter D and thus second annular surface 33, the second opening 32 being configured to form a snug fit with the outer periphery of the stamp 27 as the stamp 27 is drawn into the die 28 in use. The stamp 27 is also essentially cylindrical and defines a threaded opening 34 for engaging the threaded part of the punch portion 24 and a plurality of pointed projections 36 are circumferentially arranged around the threaded opening 34 for facing towards the portable electric knockout punch 10 to the right in Fig. 1 in use.

How a hole is formed in a piece of sheet metal 38 using the portable electric knockout punch 10 will now be described with reference to Figs. 3 to 7.

First, a die 28 is selected having a second opening 32 (the wide end) which defines a circle of the diameter D required to be formed in a piece of sheet metal. The first opening 30 (the narrow end) of the die 28 is provided around the punch portion 24 of the portable electric knockout punch 10, whereby the die 28 is slid along the length of the punch portion 24 until the die 28 engages the annular support surface 26 of the support portion 22 as illustrated in Fig. 4. To reduce the risk of the die 28 accidentally falling off the portable electric knockout punch 10 at least one magnet is provided for maintaining the die 28 in connection with the annular support surface 26, namely a plurality of magnets 37 are embedded within cavities circumferentially arranged around the annular support surface 26; however the use of one or more magnets for such purpose can be omitted for cost savings as will be appreciated.

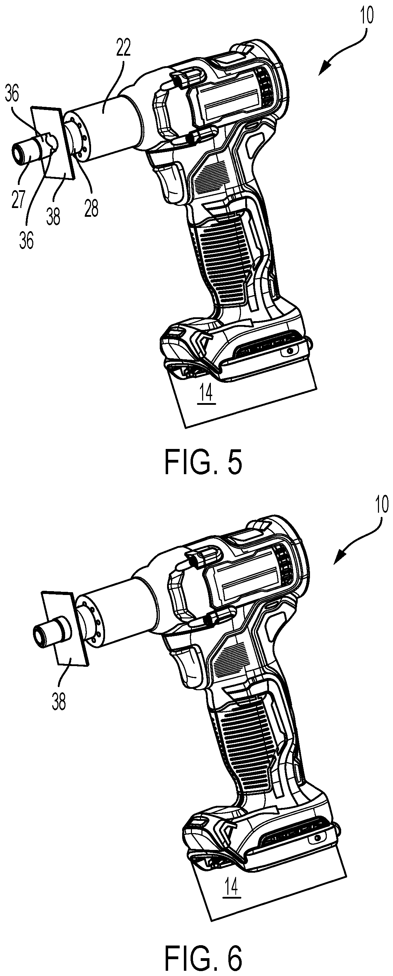

A guide hole 39 is formed in the sheet metal 38 to be worked on (e.g. using a drill or other tool), wherein persons skilled in the art will appreciate that the guide hole 39 should be wide enough to receive the punch portion 24 of the portable electric knockout punch 10 but should be smaller than the hole intended to be formed using the portable electric knockout punch 10; in other words the guide hole 39 should have a diameter smaller than the diameter D of the second opening 32 of the die 28 loaded on the portable electric knockout punch 10. One or both of the sheet metal 38 to be worked on and the portable electric knockout punch 10 are moved such that the punch portion 24 is caused to extend through the guide hole 39, wherein subsequently the stamp 27 is threaded onto the punch portion 24 with the circumferentially arranged pointed projections 36 facing towards the sheet metal 38 to be worked on as illustrated in Fig. 5.

A user then pulls the trigger 19 of the portable electric knockout punch 10 which causes the punch portion 24 to move axially such that it is drawn into the tool 10 through the support portion 22. As this is occurring the stamp 27 is pulled with increasing force against the sheet metal 38 to be worked on and eventually it punches through the sheet metal 38 and begins to be drawn into the die 28 wherein the outer periphery of the stamp 27 slides against the inner cylindrical surface of the die 28 as illustrated in Fig. 6.

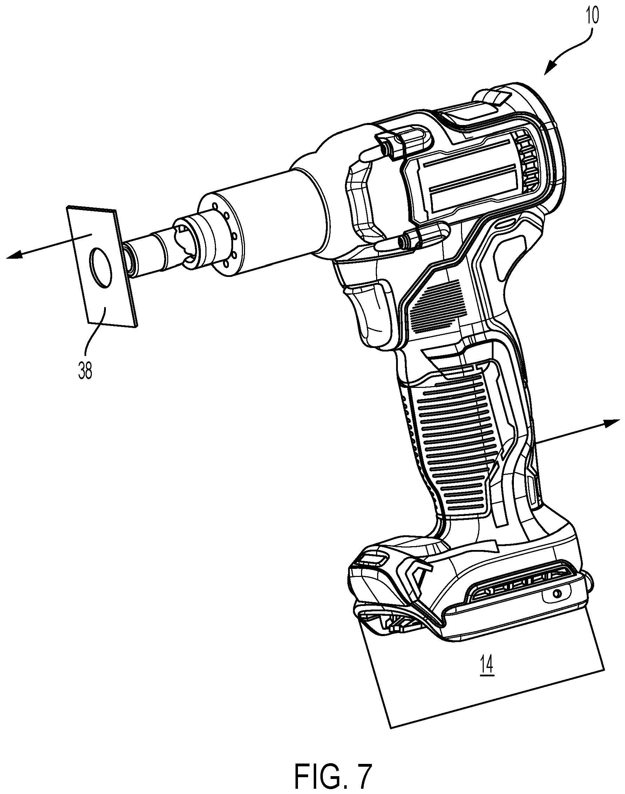

Finally one or both of the sheet metal 38 and the portable electric knockout punch 10 are moved such that the tool 10 is removed from the hole punched in the sheet metal 38 thereby leaving a circular hole in the sheet metal 38 having a diameter substantially similar to the diameter D of the second opening 32 of the die 28 as illustrated in Fig. 7.

If a user needs to punch a circular hole having a different diameter D then a different die 28 is instead loaded on the portable electric knockout punch 10 having a second opening 32 of diameter D₂. Furthermore a different stamp 27 is used, namely one having an outer periphery configured to form a snug fit with the inner cylindrical surface of the die 28 as the stamp 27 is drawn into the second opening 32 of diameter D₂. Persons skilled in the art will appreciate that a set of multiple dies 28 and corresponding stamps 27 can be provided for enabling a user to selectively punch circular holes of different diameters in sheet metal.

The transmission 50 causes torque from the electric motor 46 to be converted into linear force for causing the punch portion 24 to move relative to the support portion 22, enabling the stamp 27 to be drawn towards and into the die 28 whereby a hole can be formed in sheet metal 38. As will be described in more detail, the transmission 50 has a planetary gear arrangement 50_{S1}, 50_{P1}, 50_{R}, 50_{C1}, 50_{S2}, 50_{P2}, 50_{C2}, a bevel gear arrangement 49 and a conversion mechanism 58 whereby torque output from the electric motor 46 flows along the first axis A-A through the planetary gear arrangement 50_{S1}, 50_{P1}, 50_{R}, 50_{C1}, 50_{S2}, 50_{P2}, 50_{C2} into the bevel gear arrangement 49 which redirects the flow of torque substantially 90 degrees so that torque flowing out of the bevel gear arrangement 49 flows along a second axis B-B into the conversion mechanism 58, wherein the conversion mechanism 58 converts torque into linear force for actuating the punch portion 24 of the hole forming mechanism 20.

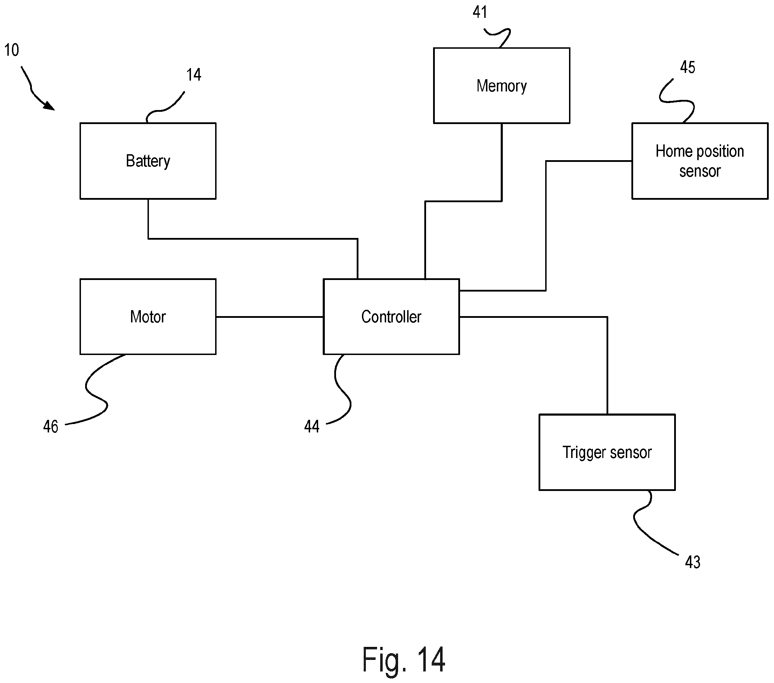

Internal features of the portable electric knockout punch 10 will now be described with reference to Fig. 8 which shows a side cross-sectional view of such power tool. Referring to Fig. 8, the portable electric knockout punch 10 has a controller 44 for determining that the trigger 19 has been pulled. In response to the controller 44 determining that the trigger 19 has been pulled, the controller 44 generates a signal to activate the electric motor 46, which is a DC brushless motor such as the BL41 DC brushless motor designed by Stanley Black & Decker Inc. and used in some commercially available DEWALT^{®} branded power tools. The controller 44 is described in more detail below with respect to Fig. 14.

The motor 46 is powered by battery 14. The battery 14 is releasably connected to the base 16 of the handle 18 via the battery attachment portion arranged on the handle 18. The battery attachment portion is arranged so that a notional line extending between the battery attachment portion and the motor output shaft 48 extends along the first longitudinal axis A-A.

Torque from the motor output shaft 48 is transferred to an input pinion 52 of a bevel gear arrangement 49 via a transmission 50. The transmission 50 comprises at least one planetary gear arrangement for reducing output speed while increasing torque. The motor output shaft 48 drives an input sun gear 50_{S1} of the first stage of the transmission 50. The input sun gear 50_{S1} meshes with a plurality of first stage planet gears 50_{P1} which mesh with a stationary outer ring gear 50_{R} and are coupled to a first stage carrier 50_{C1}. An axial extension of the first stage carrier 50_{C1} is the input sun gear 50_{S2} of the second stage of the transmission 50. The input sun gear 50_{S2} meshes with a plurality of second stage planet gears 50_{P2} which mesh with the stationary outer ring gear 50_{R} and are coupled to a second stage carrier 50_{C2}. An axial extension of the second stage carrier 50_{C2} is rotationally fixed to the input pinion 52 of the bevel gear arrangement 49.

The input pinion 52 of the bevel gear arrangement 49 thus rotates at a lower speed than the motor output shaft 48 however with an increased torque relative to the motor output shaft 48.

By locating the motor output shaft 48 of the electric motor 46, the transmission 50, the input pinion 52 of the bevel gear arrangement 49 and the battery attachment portion on the first longitudinal axis A-A extending along the longitudinal length of the handle 18, weight distribution of internal features of the portable electric knockout punch 10 is improved so the portable electric knockout punch 10 feels balanced in a user's hand. Also, by providing the electric motor 46 and the transmission 50 within the handle 18, this leaves more space available within the housing 12 above the handle 18 which means there is more freedom to position internal features of the portable electric knockout punch 10 in positions which improve overall weight distribution of the portable electric knockout punch 10 while maintaining functionality.

It will be appreciated that there is some design freedom in the transmission 50 between the motor output shaft 48 and the input pinion 52 of the bevel gear arrangement 49. In particular the number of planetary gear stages, and its (or their) configuration, forming the transmission 50 depends on the required gear ratio to be achieved between the motor output shaft 48 and the input pinion 52.

Given that it is well known that planetary gear stages step down rotation speed while stepping up torque persons skilled in the art, based on the disclosure given herein, will be able to decide upon a suitable transmission 50 arrangement which achieves the required gear ratio for their tool to function; wherein the appropriate gear ratio depends on multiple factors including maximum achievable motor output torque, pitch of the ball screw arrangement described below, friction between moveable features within the portable electric knockout punch 10 and the maximum permissible pulling force (such as up to 100kN). It will be appreciated that for some portable electric knockout punches 10 a suitable transmission 50 may only have a single planetary gear stage, whereas for other tools a suitable transmission 50 may have a plurality of planetary gear stages arranged in series.

Continuing with reference to Fig. 8 the bevel gear arrangement 49 has a bevel gear 53 meshed with the input pinion 52 for receiving torque therefrom. An axial extension of the bevel gear 53, hereafter the driving sleeve 54, is rotationally fixed relative to an input sleeve 56 of a ball screw mechanism 58. The driving sleeve 54 and input sleeve 56 are fixed relative to each other due to a friction fit arrangement. An internal surface of the input sleeve 56 comprises a threaded surface. The outer surface of the input sleeve 56 is supported by bearings 60 which enable rotation of the input sleeve 56 with respect to the housing 12. End surfaces of the input sleeve 56 are supported by axial bearings to enable rotation while providing axial support such as the axial bearing 67 in Fig. 8.

In a radial direction the bearings 60 are located between the input sleeve 56 and the inner surface of the second housing part 12b. In an axial direction the bearings 60 are located between the driving sleeve 54 and a bearing engagement sleeve 57 which is rotatably fixed to the input sleeve 56 via a friction fit engagement. Part of the bearing engagement sleeve 57 lips around the outer edge of an axial bearing 67 for preventing the axial bearing 67 from touching the inner side of the metal part 12b of the housing 12.

A threaded rod 62 is mounted within the input sleeve 56, which extends through the input sleeve 56. A plurality of balls, such as metal ball bearings, ride in the opposing threaded surfaces of the input sleeve 56 and threaded rod 62, thereby defining the ball screw mechanism 58.

When the input sleeve 56 is rotatably driven by the driving sleeve 54 this causes axial movement of the threaded rod 62. In other words, torque from the electric motor 46 is transferred through the transmission 50, through the bevel gear arrangement 49 to the input sleeve 56, whereby rotation thereof causes axial movement of the threaded rod 62. The threaded rod 62 is configured to move along the second longitudinal axis B-B of the portable electric knockout punch 10. The threaded rod 62 can move forwards or backwards along the axis B-B depending on the motor driving direction, whereby the punch portion 24 moves with the threaded rod 62.

A volume 68 (see Fig. 8) is provided within the housing 12 for accommodating the threaded rod 62 when retracted into the portable electric knockout punch 10 during a hole forming operation in use.

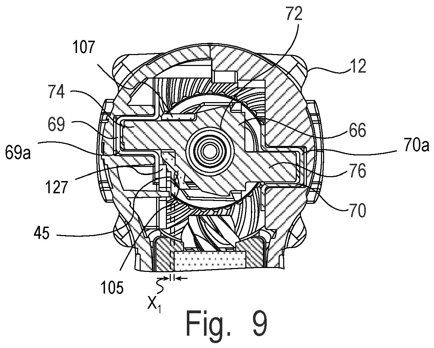

Fig. 9 shows that an anti-rotation bar 66 is engaged with the threaded rod 62 in a manner whereby the anti-rotation bar 66 is axially and rotationally fixed to the threaded rod 62. As the input sleeve 56 is rotated the anti-rotation bar 66 cooperates with the threaded rod 62 and the first and second slots 69, 70 within the housing 12 (more specifically with metallic liner plates 69a, 70a in the first and second slots 69, 70 to facilitate sliding and minimise wear) for causing the threaded rod 62 to move axially along the second longitudinal axis B-B. The anti-rotation bar 66 comprises a first arm 74 and a second arm 76. The first and second arms 74, 76 are mounted in first and second slots 69, 70 within the housing 12. When the threaded rod 62 moves along the second longitudinal axis B-B, the first and second arms 74, 76 slide along the first and second slots 69, 70. The first and second slots 69, 70 extend along longitudinal axes which are parallel to the second longitudinal axis B-B. The anti-rotation bar 66 is rotationally fixed with respect to the housing 12 so it slides relative to the housing 12 on the metallic liner plates 69a, 70a through the first and second slots 69, 70 during axial movement of the threaded rod 62.

The anti-rotation bar 66 comprises a central hole 72 with a threaded inner surface which is tightly threadably engaged with a reciprocal threaded portion at an end of the threaded rod 62 as shown in Fig. 8. The threaded rod 62 extends through an opening 65 defined by the second housing part 12b and is coupled to the hole forming mechanism 20. Fig. 8 shows that the aforementioned axial bearing 67 additionally supports the threaded rod 62.

With continued reference to Fig. 8 the rod-like punch portion 24 is fixed to the threaded rod 62 by a threaded connection. The proximal end of the punch portion 24 is a section of expanded diameter relative to the rest of the punch portion 24 (hereafter the expanded section 29) and which defines a cylindrical cavity having a threaded surface which is threaded onto a reciprocal threaded portion 73 at an end of the threaded rod 62 as shown in Fig. 8. When the rod-like punch portion 24 is in threaded engagement with the reciprocal threaded portion 73 of the threaded rod 62, both the punch portion 24 and threaded rod 62 extend along the second longitudinal axis B-B.

With continued referenced to Fig. 8 the metal housing part 12b defines a lip 41 having an outer threaded surface which forms a threaded connection with the heretofore described support portion 22. The support portion 22 is configured such that when it is threaded onto the lip 41 of the metal housing part 12b inner surfaces of the support portion 22 and lip 41 align and cooperate to define a circular opening of continuous diameter at the junction between the support portion 22 and the lip 41, such opening having a length R. The expanded section 29 of the punch portion 24 has an outer diameter substantially similar to the diameter of the opening extending through the support portion 22 and the lip 41, whereby the range of freedom of movement of the punch portion 24 in use is defined by the length R as shown in Fig. 8. Providing that the expanded section 29 has a diameter substantially similar to the opening, namely the opening of length R just mentioned, whereby the expanded section 29 slides along the inner surface of such opening in use, provides that the risk of dirt entering the internal of the tool 10 is reduced and therefore that the reliability of the tool 10 is improved.

As mentioned previously, the portable electric knockout punch 10 comprises a controller 44 to control operation of the motor 46 in use to implement a hole forming operation.

An example starting configuration of the portable electric knockout punch 10 shown in Fig. 5. A piece of sheet metal 38 is about to be punched; in other words a die 28 and stamp 27 are loaded on the tool 10 on either side of the sheet metal 38 as already described. In this starting configuration the punch portion 24 is located in a home position, which is a predetermined starting position along the second longitudinal axis B-B relative to the support portion 22. Upon the controller 44 determining that the trigger 19 is pulled the controller 44 causes the electric motor 46 to rotate in a forward rotational direction for causing the punch portion 24 to be linearly moved along the second longitudinal axis B-B towards the support portion 22 whereby the stamp 27 is moved towards and eventually into the die 28. Upon releasing the trigger 19 the controller 44 causes the motor 46 to drive in a reverse direction for returning the portable electric knockout punch 10 to a home configuration which it occupied before the trigger 19 was initially pulled. When the portable electric knockout punch 10 is in the home configuration, the punch portion 24 is in the home position.

In some embodiments the controller 44 is configured to receive user input via a user interface of the tool 10 which is indicative of the thickness of the sheet metal 38 to be punched through, wherein based on this user input the controller 44 determines the extent to which the punch portion 24 should be retracted upon pulling the trigger 19. During a hole forming operation, while the trigger 19 remains pulled the controller 44 will cause enough movement of the punch portion 24 for punching a hole through the sheet metal 38 and then will reverse motor direction and return the punch portion 24 to the home position, whereby the trigger 19 must be released before a subsequent hole forming operation can be performed. At any time during a hole forming operation if the trigger 19 is released the controller 44 will cause reverse movement of the motor 46 and will return the punch portion 24 to the home position.

The controller 44 will be discussed in more detail with reference to Fig. 14 which shows a schematic diagram of the portable electric knockout punch 10. Whilst the controller will be discussed with reference to the first embodiment described above, it will be apparent that the described controller can also be used as part of the second embodiment described herein. The controller 44 is connected to the motor 46 and the battery 14. The controller 44 is configured to selectively control the motor 46 based on an actuation signal received from a trigger sensor 43 which is configured to generate a signal indicative that the trigger 19 has been pulled or released and a home position sensor 45.

The controller 44 is configured to determine the position of the punch portion 24 based on motor turn information indicative of the number of turns (or partial turns) the motor 46 has made since initiation of the current hole forming operation when the punch portion 24 was in the home position. The motor turn information is indicative of the number of turns that the electric motor 46 has performed which corresponds to the axial position of the punch portion 24. In this way, the motor turn information is indicative of the position of the punch portion 24 and thus the stamp 27 during the hole forming operation. This provides that a clutch mechanism is not needed for protecting components of the portable electric knockout punch 10 if the punch portion 24 overshoots its intended maximum range of movement during tool use. The portable electric knockout punch 10 can determine the absolute position of the punch portion 24 with respect to a fixed part of the portable electric knockout punch 10 e.g. the support portion 22 of the hole forming mechanism 20, and thus the extent of actuation of the hole forming mechanism 20.

The home position sensor 45 is configured to generate a signal indicative that the punch portion 24 is at the home position, which is the position in which the portable electric knockout punch 10 is ready to begin a new hole forming operation. Based on information received from the home position sensor 45 the controller 44 determines that the punch portion 24 is at the home position irrespective of other position data the controller 44 receives or calculates regarding the punch portion 24.

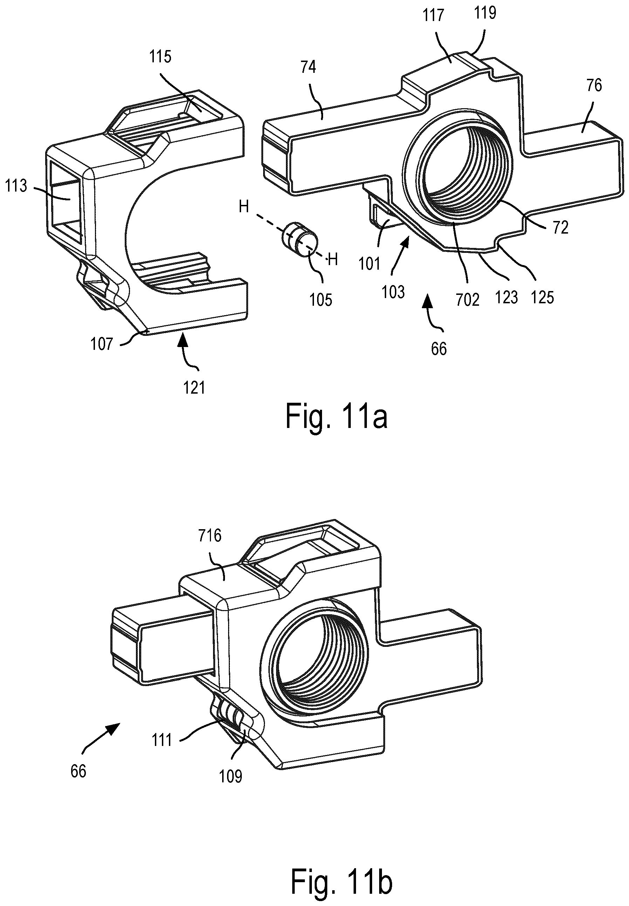

Fig 11a illustrates an exploded view of the anti-rotation bar 66 which, as already mentioned, has a central hole 72 with a threaded inner surface which is tightly threadably engaged with the reciprocal threaded surface 73 at an end of the threaded rod 62. The anti-rotation bar 66 has a mounting plate 101 projecting from a central portion 103 of the anti-rotation bar 66. A magnet 105 is mounted to the mounting plate 101. A sleeve housing 107 is mounted over the anti-rotation bar 66 as shown in Fig. 11b.

The sleeve housing 107 comprises a magnet pocket 109 for receiving the magnet 105 and the sleeve housing 107 ensures that the magnet 105 does not move with respect to the anti-rotation bar 66 when mounted to the anti-rotation bar 66 as shown in Fig. 11b. The magnet pocket 109 comprises a window 111 exposing a portion of the magnet 105. This means that the sleeve housing 107 is not positioned between the magnet 105 and the home position sensor 45. The home position sensor 45 is a Hall sensor as shown in Fig. 9. Accordingly, the sleeve housing 107 itself does not attenuate the magnetic field generated from the magnet 105 in the direction of the home position sensor 45 when the punch portion 24 is in the home position as shown in Fig. 9.

The sleeve housing 107 comprises an arm window 113 configured to receive the first arm 74. When the sleeve housing 107 is mounted on the anti-rotation bar 66, the first arm 74 projects through the arm window 113. The sleeve housing 107 comprises a snap-fit mechanism 115 for engaging a locking ramp 117 and snapping against a locking shoulder portion 119 of the anti-rotation bar 66. This securely engages the sleeve housing 107 against the anti-rotation bar 66. The sleeve housing 107 comprises a similar lower snap-fit mechanism 121 configured to engage a lower locking ramp 123 and snapping against a lower locking shoulder portion 125 of the anti-rotation bar 66.

Looking at Fig. 9 the portable electric knockout punch 10 comprises a printed circuit board (PCB) 127 comprising the home position sensor 45. The home position sensor 45 is configured to detect the magnet 105 when the punch portion 24 is in the home position. The home position sensor 45 and the magnet 105 are arranged to be close to each other when the punch portion 24 is in the home position. In some examples, the minimum distance X₁ (as shown in Fig. 9) between the home position sensor 45 and the magnet 105 is 1.1mm. It has been noted that this minimum distance allows for sufficient sensitivity in the home position sensor 45 detecting relative movement of the magnet 105 with respect to the home position sensor 45. At the same time this allows sufficient clearance between the first and second arms 74, 76 and the first and second slots 69, 70 to allow slidable movement of the first and second arms 74, 76 in the first and second slots 69, 70.

As mentioned above, the anti-rotation bar 66 is axially and rotationally fixed relative to the threaded rod 62 and is rotationally fixed with respect to the housing 12. Given that the punch portion 24 is caused to move axially upon axial movement of the threaded rod 62 this means that the anti-rotation bar 66, the magnet 105, the threaded rod 62 and the punch portion 24 move together along the axis B-B in use. Detecting movement of the magnet 105 thus allows movement of the punch portion 24 to be detected.

As shown in Fig. 11a, the magnet 105 comprises a magnetic axis H-H which extends in a direction between opposite poles of the magnet 105 and the magnetic axis H-H is parallel with the second longitudinal axis B-B of the portable electric knockout punch 10 along which the punch portion 24 moves from the home position to an active position during a hole forming operation. In some examples the heretofore described arrangement is configured to detect variations in position of the magnet 105 as low as 0.6mm, which means the punch portion 24 can be determined to have reached the home position to an accuracy of 0.6mm.

The home position sensor 45 is configured to detect a specific magnetic pole. In other words, the home position sensor 45 is configured to detect magnetic flux of one polarity while being blind to magnetic flux of the other polarity, meaning the home position sensor 45 generates a signal in response to detection of a specific pole of the magnet 105. For example, the home position sensor 45 is configured to detect magnetic flux emanating from the north pole of the magnet 105 while being blind to magnetic flux emanating from the south pole of the magnet 105, meaning the home position sensor 45 generates a signal in response to detection of the north pole of the magnet 105. The portable electric knockout punch 10 is configured such that the middle portion of the magnet 105 - the transition between north and south magnetic poles - is aligned with the home position sensor 45 when the punch portion 24 is in the home position. That is, upon occurrence of a change in polarity of the magnetic flux to which the home position sensor 45 is exposed then the home position sensor 45 generates a signal which is indicative of the punch portion 24 being in the home position.

This can be used to detect when the punch portion 24 has reached its home position during a reset stage of operation of the portable electric knockout punch 10. Continuing with the example in which the home position sensor 45 is configured to detect magnetic flux emanating from the north pole of the magnet 105 only while being blind to magnetic flux emanating from the south pole of the magnet 105: the magnet 105 may be aligned such that during a hole forming operation when the punch portion 24 and the magnet 105 move away from the home position sensor 45 the home position sensor 45 is only exposed to magnetic flux emanating from the south pole of the magnet 105 meaning no signal is generated by the home position sensor 45. During a reset stage of operation of the portable electric knockout punch 10 as the punch portion 24 is moved towards the home position, and the magnet 105 is moved towards the home position sensor 45, the home position sensor 45 is exposed to magnetic flux emanating from the south pole of the magnet 105 meaning no signal is generated by the home position sensor 45. However, after the punch portion 24 has reached the home position and continues to move beyond the home position, the magnet 105 moves past the home position sensor 45 such that the home position sensor 45 is only exposed to magnetic flux emanating from the north pole of the magnet 105 meaning a signal is suddenly generated by the home position sensor 45. The controller 44 can use this signal to determine that the reset stage of operation is complete.

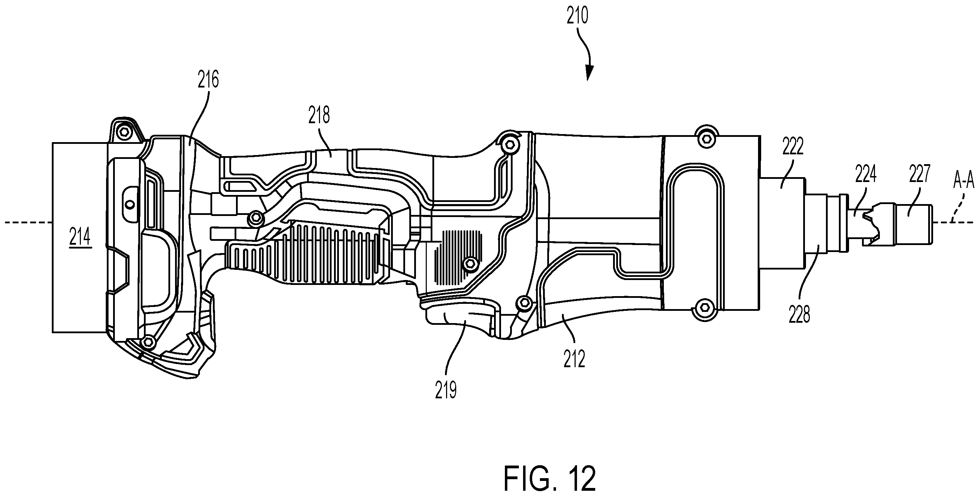

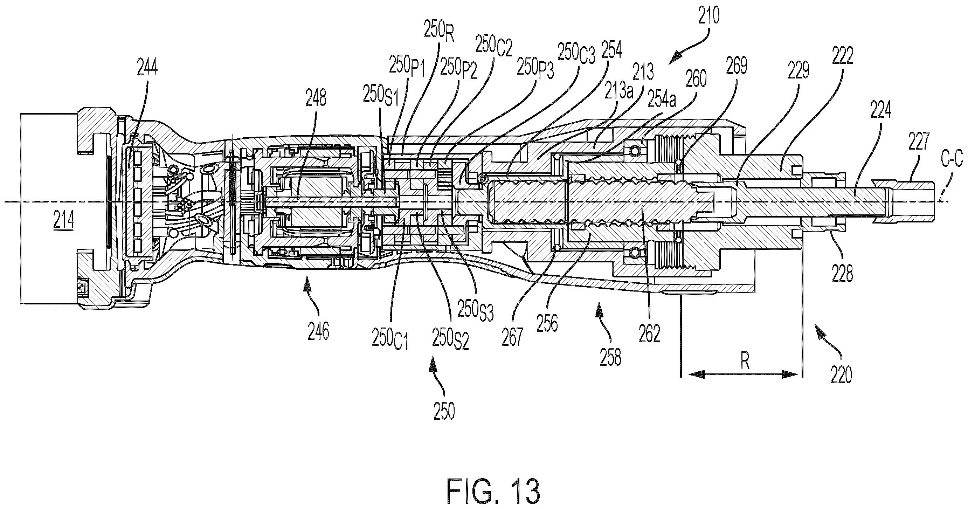

Figs. 12 and 13 show another embodiment of the portable electric knockout punch 210, wherein corresponding features to the first embodiment described herein are labelled with like reference numerals increased by 200. The portable electric knockout punch 210 is an inline version wherein the battery attachment feature (and thus battery 214), the electric motor 246, the transmission 250, the ball screw mechanism 258 and the hole forming mechanism 220 are arranged in axial sequence one after the other.

Looking at Fig. 13 the motor output shaft 248 extends along the axis C-C and drives an input sun gear 250_{S1} of the first stage of the transmission 250. The input sun gear 250_{S1} meshes with a plurality of first stage planet gears 250_{P1} which mesh with a stationary outer ring gear 250_{R} (which extends along the axis C-C) and are coupled to a first stage carrier 250_{C1}. An axial extension of the first stage carrier 250_{C1} is the input sun gear 250_{S2} of the second stage of the transmission 250. The input sun gear 250_{S2} meshes with a plurality of second stage planet gears 250_{P2} which mesh with the stationary outer ring gear 250_{R} and are coupled to a second stage carrier 250_{C2}. An axial extension of the second stage carrier 250_{C2} is the input sun gear 250_{S3} of the third stage of the transmission 250. The input sun gear 250_{S3} meshes with a plurality of third stage planet gears 250_{P3} which mesh with the stationary outer ring gear 250_{R} and are coupled to a third stage carrier 250_{C3}. An axial extension of the third stage carrier 250_{C3} cooperates with a drive sleeve 254 of the ball screw mechanism 258, wherein such features are rotationally locked such that rotation of the third stage carrier 250_{C3} rotatably drives the drive sleeve 254.

It will be appreciated that there is some design freedom in the transmission 250 between the motor output shaft 248 and the drive sleeve 254 of the ball screw mechanism 258. In particular the number of planetary gear stages, and its (or their) configuration, forming the transmission 250 depends on the required gear ratio to be achieved between the motor output shaft 248 and the drive sleeve 254 of the ball screw mechanism.

Similarly as heretofore described in connection with the first embodiment the driving sleeve 254 is fixed to an input sleeve 256 due to a friction fit arrangement and an internal surface of the input sleeve 256 comprises a threaded surface for cooperating with a threaded surface of the threaded rod 262. Moreover a plurality of balls, such as metal ball bearings, ride in the opposing threaded surfaces of the input sleeve 256 and threaded rod 262, thereby defining a ball screw arrangement 258.

A metal inner housing 213 supports the ball screw arrangement 258. A first axial bearing 267 is received between the internal surface of a first step portion 213a of the metal inner housing 213 and an external surface of a step portion 254a of the drive sleeve 254. A second axial bearing 269 is received between the internal surface of a second step portion of the metal inner housing 213 and an end surface of the input sleeve 256. The input sleeve 256 is thus axially supported between the second axial bearing 269 and an inner surface of the drive sleeve 254. Additionally the input sleeve 256 is supported in a radial direction by one or more bearings 260 which permit rotation of the input sleeve 256. In a radial direction the (or each) bearing 260 is (or are) located between the input sleeve 256 and the inner surface of the metal inner housing 213, whereby an outer race of the (or each) bearing 260 is friction fit with an inner surface of the metal inner housing 213 and an inner race of the (or each) bearing 260 is friction fit with the input sleeve 256. Looking at Fig. 13 the drive sleeve 254 is axially supported between the axial bearing 267 and the bearing 260, wherein the drive sleeve 254 extends through an opening defined by the axial bearing 267. The drive sleeve 254 rotates in use without touching the inner surface of the metal inner housing 213.

In use, torque from the electric motor 246 is transferred through the transmission 250 to the drive sleeve 254, whereby rotation thereof drives rotation of the input sleeve 256 for causing axial movement of the threaded rod 262. The threaded rod 262 is configured to move along the longitudinal axis C-C of the tool 210. The threaded rod 262 can move forwards or backwards along the axis C-C depending on the motor driving direction, whereby the punch portion 224 moves with the threaded rod 262 causing actuation of the hole forming mechanism 220.

With continued reference to Fig. 13 the rod-like punch portion 224 is fixed to the threaded rod 262 by a suitable connection between such features such as via a threaded connection or plug-and-socket type connection between such features. In particular the threaded rod 262 is rotatably and axially fixed to the rod-like punch portion 224. Since the punch portion 224 and support portion 222 of the hole forming mechanism 220 must permit movement relative to each other they are shaped and cooperate to enable axial movement between the punch portion 224 and support portion 222 but restrict rotational movement of the punch portion 224 and support portion 222 relative to each other; whereby in use the threaded rod 262 is able to move axially within the tool 210 but is restricted from rotating.

The support portion 222 defines an opening through which the punch portion 224 slides, namely an expanded section 229 of the punch portion 224 has an outer diameter substantially similar in shape and size to the inner diameter of the opening through the support portion 222. The range of axial movement of the punch portion 224 is defined by the length R of the opening through the support portion 222, whereby the expanded section 229 slides along the inner surface of such opening in use which provides that the risk of dirt entering the internal of the tool 210 is reduced and therefore that the reliability of the tool 210 is improved.

In an example starting configuration of the portable electric knockout punch 210 a die 228 and stamp 227 are loaded on the tool 210 on either side of some sheet metal as heretofore described. In this starting configuration the punch portion 224 is located in a home position, which is a predetermined starting position along the longitudinal axis C-C relative to the support portion 222. Upon the controller 244 determining that a trigger 219 of the tool 210 is actuated the controller 244 causes the electric motor 246 to rotate in a forward rotational direction for causing the punch portion 224 to be linearly moved along the longitudinal axis C-C towards the support portion 222 whereby a hole is punched in the sheet metal.

In some embodiments the controller 244 is configured to receive user input via a user interface of the tool 210 which is indicative of the thickness of the sheet metal being worked on, wherein based on this user input the controller 244 determines the extent to which the punch portion 224 should be retracted upon actuating the trigger 219. During a hole forming operation, while the trigger 219 remains actuated the controller 244 will cause enough movement of the punch portion 224 for punching a hole in the sheet metal being worked on and then will reverse motor direction and return the punch portion 224 to the home position, whereby the trigger must be released before a subsequent hole forming operation can be performed. At any time during a hole forming operation if the trigger is released the controller 244 will cause reverse movement of the motor 246 and will return the punch portion 224 to the home position.

For the avoidance of doubt the portable electric knockout punch 10, 210 of either embodiment can be used with a range of dies 28 and stamps 27 configured to form holes in sheet metal of a range of different sizes. Accordingly, if a small hole is required to be formed in sheet metal then an appropriate die 28 and corresponding stamp 27 are removably mounted on the portable electric knockout punch 10, 210 whereas if a bigger hole is required to be formed in sheet metal then a different, appropriately configured, die 28 and corresponding stamp 27 are removably mounted on the portable electric knockout punch 10, 210.

A magnet is fixed relative to the threaded rod 262 such that it moves axially back-and-forth with the threaded rod 262 in use. A Hall sensor mounted in the tool 200 can be used to detect when the magnet passes in front of the Hall sensor for determining when the punch portion 224 of the tool 200 has returned to the home position during a reset operation in a manner similar to that heretofore described; namely whereby the manet is mounted such that its magnet axis aligns with the axis C-C and the Hall sensor can detect magnet flux of North or South polarity so when the magnet moves past the Hall sensor the polarity of magnetic flux to which the Hall sensor is exposed changes which can be detected for indicating when the punch portion 224 of the tool 200 has returned to the home position during a reset operation.

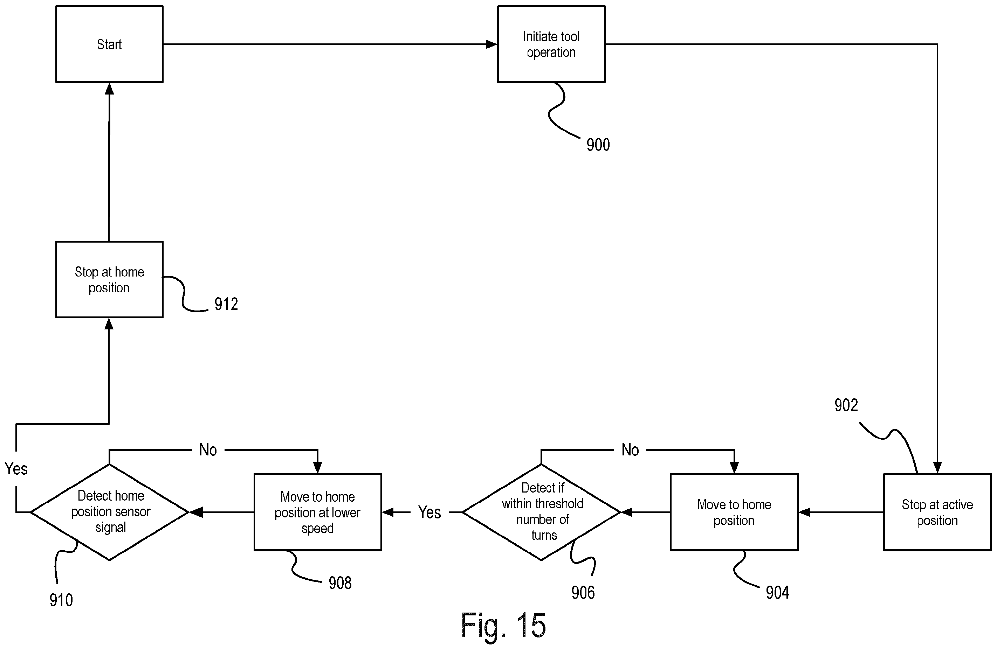

Operation of the portable electric knockout punch 10 will now be discussed in more detail with respect to Figs 15, 16 and 17. In summary during a hole forming stage of operation the controller 44 is able to track the axial position of the punch portion 24 based on the number of turns (or partial turns) of the brushless electric motor 46 determined from information output by the brushless electric motor 46 (more specifically, information output by control electronics/circuitry of the brushless electric motor 46) and during a reset stage of operation the controller 44 is able to determine when the punch portion 24 has returned to its home position based on output from the home position sensor 45.

Fig. 15 shows a simplified mode of operation of the portable electric knockout punch 10. The functionality illustrated in Fig. 15 is implemented by the controller 44 on the basis of software stored in memory 41, whereby upon the controller 44 running such software it implements the functionality illustrated in Fig. 15. The controller 44 is configured to control the portable electric knockout punch 10 based on only a signal received from the home position sensor 45 and motor turn information. This means that the controller 44 can control the axial movement of the punch portion 24 based on only the motor turn information and the output generated by the home position sensor 45. Advantageously, this reduces the complexity of the portable electric knockout punch 10 and therefore reduces the likelihood of sensor failure because the number of position sensors used in the portable electric knockout punch 10 is reduced.

Based on input from the trigger sensor 43 the controller 44 initiates an operation to move the punch portion 24 from a home position to an active position as shown in step 900 of Fig. 15. The punch portion 24 is in the home position when the controller 44 starts the hole forming operation (denoted 1100 in Fig. 17). The controller 44 starts the hole forming operation by issuing a control instruction to the motor 46 at time t = T₁ whereby the motor 46 is caused to ramp up in speed to a predetermined target speed which is attained at time T₂ shown in Fig. 17. In some examples the predetermined target speed is the maximum driving speed of the motor 46. In some examples the predetermined target speed may fall in the range between 24,000 RPM to 30,000 RPM. By configuring the portable electric knockout punch 10 so that the predetermined target speed of the motor 46 between T₁ and T₂ is the maximum driving speed of the motor 46 this provides that the punch portion 24 moves from the home position to the active position as quickly as possible. It will however be appreciated that in practice the maximum driving speed of the motor 46 is dependent on various factors such as the level of charge of the battery 14, the temperature of the battery 14, the magnitude of force required to form a hole in a hole forming operation and the magnitude of friction experienced by internal features of the portable electric knockout punch 10 in use.

The controller 44 issues another control instruction to stop the motor 46 when the threaded rod 62 and thus the punch portion 24 are in the active position as shown in step 902, wherein how this is determined is explained below. In response the motor 46 brakes at t=T₃ and stops at t=T₄; preferably between t=T₃ and t=T₄ the motor 46 is braked at the maximum achievable deceleration rate.

In one mode of operation a user manually controls the hole forming action by releasing the trigger 19 when they determine that the stamp 27 has punched through the sheet metal 38. Upon releasing the trigger 19 the trigger sensor 43 generates a signal indicative of this whereby the controller 44 causes the motor 46 to stop according to step 902. Subsequently if the controller 44 does not receive within a threshold amount of time another signal from the trigger sensor 43 indicative that the trigger 19 has been re-pulled the controller 44 implements step 904 whereas if the controller 44 does receive such a signal within the threshold amount of time, then it causes the motor 46 to continue the hole forming operation. Even during such manual mode of operation, the controller 44 tracks the position of the punch portion 24 by counting the number of motor turns to have occurred during the hole forming operation. As a safety precaution the controller 44 will stop the hole forming operation, and implement step 902, if the motor 46 is caused to turn by a threshold number of times during the hole forming operation.

As mentioned the controller 44 is configured to receive motor turn information from the brushless electric motor 46 (more specifically such information is output by control electronics/circuitry of the brushless electric motor 46).

This means that the controller 44 is configured to determine the position of the threaded rod 62 and thus the punch portion 24 when moving towards the active position away from the home position based on motor turn information alone.

The portable electric knockout punch 10 then needs to perform a drive back home operation (denoted 1104 in Fig. 17), alternatively referred to as a reset stage of operation, in order to move the punch portion 24 back to the home position in order to be ready to implement a subsequent hole forming operation. To enact the reset stage of operation the controller 44 issues a control instruction to the motor 46 to drive in a reverse direction and thereby move the punch portion 24 towards the home position as shown in step 904. In response to the controller 44 issuing this instruction at T=Ts the motor 46 is caused to ramp up in speed (in a reverse direction) to the predetermined target speed which is attained at t=T₆. As a reminder, in some examples the predetermined target speed is the maximum driving speed of the motor 46 so that the punch portion 24 moves from the active position towards the home position as quickly as possible; again though as mentioned previously the maximum driving speed of the motor 46 which is achievable in practice is dependent on various factors such as the level of charge of the battery 14, the temperature of the battery 14 and the magnitude of friction experienced by internal features of the portable electric knockout punch 10 in use.

In order to protect the portable electric knockout punch 10, the controller 44 does not drive the motor 46 at the predetermined target speed through the entire distance that the punch portion 24 moves towards the home position. Instead, the controller 44 is configured to cause the motor 46 to drive in reverse direction at a reduced speed when the punch portion 24 is determined by the controller 44 to be within a threshold distance of the home position, which will be described in more detail later.

During reverse driving of the motor 46 in step 906 of Fig. 15 the controller 44 compares the number of motor turns occurring during reverse movement with the number of motor turns which occurred during the hole forming operation. When the number of motor turns determined to have occurred during reverse movement is within a threshold amount of the number of motor turns which occurred during the hole forming operation the controller 44 in step 908 causes the motor driving speed in the reverse direction to be reduced so that the punch portion 24 can be more precisely positioned in the home position to reduce the extent to which the punch portion 24 overshoots the home position. The threshold amount is realised in step 906 when the number of motor turns determined to have occurred during reverse movement is within 25% of the number of motor turns which occurred during the hole forming operation. In other words, the threshold condition of step 906 is realised when the punch portion 24 has been driven 75% of the way back towards its home position. If during reverse driving of the motor 46 in step 906 the controller 44 determines that the threshold condition has not been satisfied the motor 46 is caused to continue driving in reverse at the predetermined target speed wherein step 906 is repeated.

Returning to Fig. 17, in response to the controller 44 in step 908 issuing a control instruction to slow the motor 46 down at time T₇ the motor 46 decelerates to a predetermined early braking speed which is lower than the predetermined target speed of the motor 46 between times T₂ to T₃ and T₆ to T₇. In this way, the controller 44 provides early braking to the motor 46 before the punch portion 24 reaches the home position.

In embodiments in which the predetermined motor target speed between times T₂ to T₃ and T₆ to T₇ ranges between 24,000 RPM to 30,000 RPM the predetermined early braking speed ranges between 15,000 RM to 20,000 RPM. More specifically in an embodiment in which the target motor driving speed between T₂ to T₃ and T₆ to T₇ is 24,000 RPM the early braking speed is 15,000 RPM. In another embodiment in which the target motor driving speed between T₂ to T₃ and T₆ to T₇ is 30,000 RPM the early braking speed is 20,000 RPM.

The rate of deceleration between times T₇ and T₈ when the motor 46 reaches the predetermined early braking speed is such that the early braking speed is achieved before the punch portion 24 reaches the home position, wherein the rate of deceleration between T₇ and T₈ can be the maximum achievable deceleration rate although there is freedom to use a less steep rate of deceleration provided that the early braking speed is achieved before the punch portion 24 reaches the home position. When the early braking speed has been achieved at time t = T₈ the controller 44 controls the motor 46 to keep driving at that speed until the controller 44 detects input from the home position sensor 45 in step 910 which is indicative that the punch portion 24 has reached the home position as heretofore described. In response the controller 44 issues in step 912 at t = T₉ a stop instruction to stop the motor 46 completely whereby the motor 46 decelerates (preferably at the maximum achievable deceleration rate) until the motor 46 stops turning.

When the controller 44 receives the signal from the home position sensor 45 in step 910 the controller 44 is configured to reset the motor turn information stored in memory 41 to correspond with the punch portion 24 being in the home position. For example, the controller 44 resets the active number of motor turns to zero. This means that any drift between the active number of motor turns determined by the controller 44 and the actual number of motor turns is reset to zero each time the portable electric knockout punch 10 is operated.

This means that the controller 44 is configured to determine the position of the punch portion 24, and thereby control the operating speed of the motor 46, when the punch portion 24 is moving towards the home position based on the motor turn information and a signal received from the home position sensor 45.

The punch portion 24 has now returned to the home position and the portable electric knockout punch 10 is ready to implement a subsequent hole forming operation.

As already mentioned, the maximum driving speed of the motor 46 which is achievable in practice is dependent on multiple factors such as the level of charge of the battery 14, the temperature of the battery 14, the magnitude of force required to form a hole in particular sheet metal, and the magnitude of friction experienced by internal features of the portable electric knockout punch 10 in use. In tools in which a punch portion 24 is driven backwards during a reset stage of operation at maximum speed all the way until the home position is detected and a complete stop of the motor 46 is initiated the level of overshoot past the home position is variable based on the multiple factors affecting the maximum driving speed of the motor 46. Thus, when such tools are designed, they need to have high tolerances built into the design to accommodate the variable extents to which the punch portion 24 may overshoot the home position. The heretofore described early braking functionality addresses this issue. The early braking speed is chosen to be lower than the maximum driving speed of the motor 46 and so is less affected by the factors mentioned above such as battery charge level, meaning that the portable electric knockout punch 10 can more reliably control the motor 46 to operate at a specific predetermined early braking speed. By causing the motor 46 to have slowed down to the early braking speed by the time when the punch portion 24 reaches the home position means that when the home position is finally reached, and the punch portion 24 is braked hard, the punch portion 24 is always braking from the same speed regardless of tool operating conditions (e.g. ambient temperature/battery charge level) and so the level of overshoot past the home position is more predictable meaning the portable electric knockout punch 10 can be controlled within tighter operational tolerances, whereby the tolerances required to be built into the tool design are less.

In view of the foregoing paragraph, it will be appreciated that there is some freedom for a designer to select a suitable percentage change reduction in motor speed during a reset stage of operation between the predetermined target speed and the early braking speed. If the early braking speed is very low this will of course reduce the potential level of overshoot of the punch portion 24 past the home position, however, the overall duration of the reset stage of operation will be increased. On the other hand, if the early braking speed is much closer to the predetermined target speed this will reduce the overall duration of the reset stage of operation but will increase the potential level of overshoot of the punch portion 24 past the home position. Some balance must therefore be struck in selecting a suitable percentage change reduction in motor speed during a reset stage of operation between the predetermined target speed and the early braking speed, which maintains the potential level of overshoot of the punch portion 24 past the home position within acceptable levels while maintaining a reasonable overall duration of the reset stage of operation. With this in mind, it is envisaged that in some embodiments during a reset stage of operation the early braking speed can range between 50% to 80% of the predetermined target speed. In some embodiments during a reset stage of operation the early braking speed can range between 60% to 70% of the predetermined target speed. In some embodiments during a reset stage of operation the early braking speed can range between 62% to 67% of the predetermined target speed.

Another example will now be discussed with reference to Fig. 16 which is identical to Fig. 15 except that the operation of the portable electric knockout punch 10 comprises additional functionality which will now be described. The functionality illustrated in Fig. 16 is implemented by the controller 44 on the basis of software stored in memory 41, whereby upon the controller 44 running such software it implements the functionality illustrated in Fig. 16.

The controller 44 is configured to actuate the portable electric knockout punch 10 in response to receiving an actuation signal from the trigger sensor 43 in step 1000. The controller 44 then determines that the user wishes to use the portable electric knockout punch 10 and in response determines whether the punch portion 24 is in the home position in step 1002. The controller 44 can determine whether the punch portion 24 is in the home position similarly to before, namely based on whether a signal is generated by the home position sensor 45. If in step 1002 the controller 44 determines that a signal is generated by the home position sensor 45 then the punch portion 24 is determined to be in the home position and in response the controller 44 proceeds to step 900 and initiates the hole forming operation.

Conversely if in step 1002 the controller 44 determines that a signal is not generated by the home position sensor 45 then the punch portion 24 is determined not to be in the home position. This may be the case if power was removed before the portable electric knockout punch 10 could finish performing a reset stage of operation 1104. In response to the controller 44 making a negative determination in step 1002 it issues a control instruction to drive the motor 46 in reverse at a low speed in step 908 until in step 910 the controller 44 detects a signal generated by the home position sensor 45 indicative that the punch portion 24 is in the home position; the low reverse driving speed of the motor 46 is lower than the aforementioned target driving speed between T₂ to T₃ and T₆ to T₇ discussed in connection with Fig. 17.

In some embodiments in which the target motor driving speed between T₂ to T₃ and T₆ to T₇ ranges between 24,000 to 30,000 RPM the low reverse driving speed ranges between 15,000 to 20,000 RPM. More specifically in an embodiment in which the target motor driving speed between T₂ to T₃ and T₆ to T₇ is 24,000 RPM the low reverse driving speed is 15,000 RPM. In another embodiment in which the target motor driving speed between T₂ to T₃ and T₆ to T₇ is 30,000 RPM the low reverse driving speed is 20,000 RPM.

In response to the controller 44 receiving a positive determination in step 910 subsequently the controller 44 in step 912 stops reverse driving of the motor 46 (preferably at the maximum achievable deceleration rate), whereby the punch portion 24 is now in the home position. When the user subsequently releases and depresses the trigger 19 the tool repeats steps 1000, 1002 and then proceeds to step 900 to initiate the hole forming operation.

Once the hole forming operation has been initiated, the controller 44 determines the displacement of the punch portion 24 from the home position in the manner already described based on counting motor turns. If the controller 44 determines in step 1004 that the number of motor turns during the hole forming operation has reached a predetermined maximum number of motor turns stored in memory 41 (whereby the punch portion 24 is in the maximum permissible hole forming position) the controller 44 stops the motor 46 in step 902 as before.

If the controller 44 makes a negative determination in step 1004 the controller 44 continues the hole forming operation and then determines in step 1006 whether the number of motor turns during the hole forming operation has reached a predetermined minimum number of motor turns stored in memory 41.

If in step 1006 the controller 44 makes a negative determination the controller 44 continues the hole forming operation.

If in step 1006 the controller 44 makes a positive determination the controller 44 then determines in step 1008 whether the trigger 19 is deactivated based on input from the trigger sensor 43.

If in step 1008 the controller 44 makes a negative determination, then the controller 44 continues the hole forming operation in step 900. However, if in step 1008 the controller 44 makes a positive determination the controller 44 stops the motor 46 in step 902 as before.

Subsequently steps 904 to 912 in Fig. 16 are implemented in a similar manner to the correspondingly numbered steps in Fig. 15 which have already been discussed.

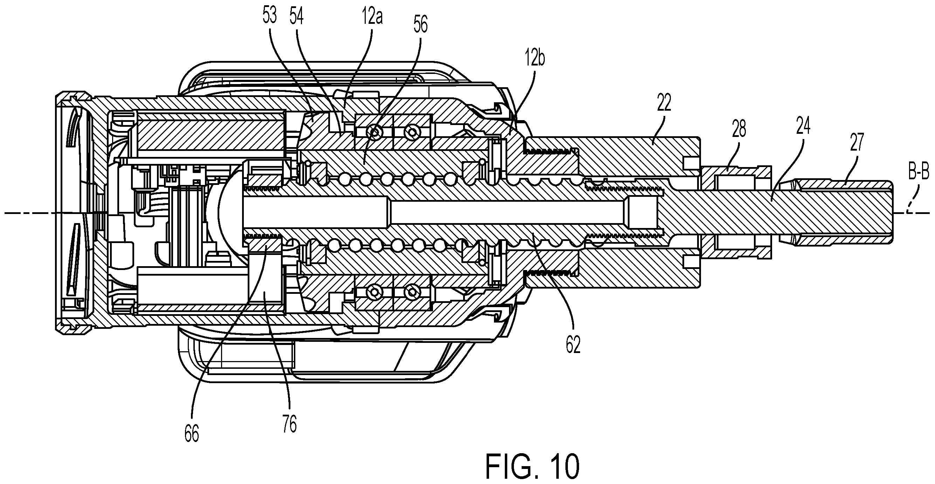

At this stage it is acknowledged that even though the control methods illustrated in Figs. 15 to 17 have been described in the context of the first embodiment of a portable electric knockout punch 10 described in connection with Figs. 1 to 11b such control methods can also be similarly implemented in the second embodiment of a portable electric knockout punch 210 described in connection with Figs. 12 and 13.

It will be appreciated that whilst various aspects and embodiments have heretofore been described the scope of the present invention is not limited thereto and instead extends to encompass all arrangements, and modifications and alterations thereto, which fall within the spirit and scope of the appended claims.

It will be appreciated that, in the first embodiment, the transmission 50 between the motor output shaft 48 and the input pinion 52 of the bevel gear arrangement 49 may have just one gear stage or multiple gear stages depending on the torque output to be achieved by the transmission 50. In the second embodiment, the transmission 250 between the motor output shaft 248 and the drive sleeve 254 may have just one gear stage or multiple gear stages depending on the torque output to be achieved by the transmission 250. Factors influencing the number of gear stages within the transmissions 50, 250 include, without limitation, the size of the gears, length of the handle 18, 218, maximum motor torque, thickness of the input pinion 52 and friction between moveable features within the portable electric knockout punch 10, 210 to be manufactured. As such the transmissions 50, 250 in some portable electric knockout punches 10, 210 will only have a single planetary gear stage whereas other tools will have a plurality of planetary gear stages arranged in series.

Although the battery 14, 214 up to now is said to be releasably connected to a base 16, 216 of the handle 18, 218 via a battery attachment portion in other embodiments the battery 14, 214 may be permanently within the housing 12, 212 and not removable and such tools must be capable of connecting to a power source to charge the battery 14, 214. Alternatively or additionally the tool 10, 210 may be configured to receive electric power from a mains power supply.

The electric motor 46, 246 has been described up to now as being located entirely within the handle 18, 218. However, in some embodiments, the electric motor 46, 246 can be located at least partly within the handle 18, 218 meaning that part of the motor 46, 246 is located in the handle 18, 218 where a user grips the tool in use whereas part of the motor 46, 246 is located above the handle 18, 218 and thus above where a user grips the tool in use.

The electric motor 46, 246 has up to now been described as a brushless DC motor however in other embodiments other suitable electric motors can be used instead such as a brushed motor having a motor output shaft driven by a stator and having at least one magnet on the motor output shaft 48, 248. For the controller 44, 244 to determine motor turn information of such a brushed motor the portable electric power tool 10, 210 additionally has at least one Hall sensor which cooperates with the at least one magnet on the motor output shaft and which generates output indicative of variations in magnetic flux density as the motor shaft rotates which can be used by the controller 44, 244 to determine e.g. number of motor turns.

The transmission 50, 250 has been described up to now as being located entirely within the handle 18, 218. However, in some embodiments, the transmission 50, 250 can be located at least partly within the handle 18, 218 meaning that part of the transmission 50, 250 is located in the handle 18, 218 where a user grips the tool in use whereas part of the transmission 50, 250 is located above the handle 18, 218 and thus above where a user grips the tool in use.

The driving sleeve 54, 254 and input sleeve 56, 256 may be fixed relative to each other due to a friction fit arrangement. However, in other examples, the driving sleeve 54, 254 and input sleeve 56, 256 can be fixed together with other methods e.g., adhesive, welding, spline-fit engagement, other male and female interlocking-type arrangement etc. Alternatively, the driving sleeve 54, 254 and input sleeve 56, 256 can be a single unitary element.

The conversion mechanism 58, 258 which converts torque originating from the electric motor 46, 246 into linear force for actuating the punch portion 24, 224 of the hole forming mechanism 20, 220 is described as being a ball screw mechanism 58, 258. However, alternatively, in some embodiments the portable electric knockout punch 10, 210 may have a roller screw mechanism (sometimes known as a planetary roller screw mechanism) instead of a ball screw mechanism for converting torque into linear force. A person skilled in the art will appreciate that this can be achieved by rotationally fixing the driving sleeve 54, 254 to an input sleeve 56, 256 of the roller screw mechanism; wherein a set of rollers (sometimes called planetary rollers) are provided between the internal surface of the input sleeve 56, 256 and an external surface of the threaded rod 62, 262. When the driving sleeve 54, 254 is caused to rotate it drives rotation of the input sleeve 56, 256 of the roller screw mechanism and thus via the rollers causes linear movement of the threaded rod 62, 262 and thus causes actuation of the hole forming mechanism 20, 220. Roller screw mechanisms achieve higher force relative to similarly sized ball screw mechanisms so by providing a tool with a roller screw mechanism a higher pulling force of the hole forming mechanism 20, 220 will be enabled compared to using a similar sized ball screw mechanism 58, 258.

The controller 44, 244 is described with reference to Fig. 14 above and whilst illustrative embodiments have been described as employing software it will be appreciated by persons skilled in the art that the functionality provided by such software may instead be provided by hardware (for example by one or more application specific integrated circuits), or indeed by a mix of hardware and software.

In general, the functionality described in connection with Figs. 15 and 16 may be implemented in hardware or special purpose circuits, software, logic, or any combination thereof. For example, some aspects may be implemented in hardware while other aspects may be implemented in firmware or software which may be executed by the controller 44, 244, microprocessor or other computing device although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or by the controller 44, 244 or other computing devices or some combination thereof.

It will be appreciated that in some embodiments the motor turn information received by the controller 44, 244 from the brushless electric motor 46, 246 (more specifically, from control electronics/circuitry of the brushless electric motor 46, 246) is directly indicative of the number of motor turns of the electric motor. In other embodiments the controller 44, 244 determines the number of motor turns based on additional processing of the motor turn information received by implementing software functionality stored in memory 41. In other words in some embodiments the controller 44, 244 receives information directly indicative of the number of active motor turns and in other embodiments the controller 44, 244 itself calculates the number of active motor turns.

The memory 41 may be of any type suitable to the local technical environment and may be implemented using any suitable data storage technology, such as semiconductor-based memory devices, magnetic memory devices and systems, optical memory devices and systems, fixed memory, and removable memory. Also, the controller 44, 244 may be of any type suitable to the local technical environment, and may include one or more of generalpurpose microprocessors, digital signal processors (DSPs) or processors based on multi core processor architecture as non-limiting examples.

Some examples of the disclosure may be implemented as a chipset, in other words a series of integrated circuits communicating among each other. The chipset may comprise microprocessors arranged to run code, application specific integrated circuits (ASICs), or programmable digital signal processors for performing the operations described above.

As shown in Fig. 11a, the anti-rotation bar 66 optionally comprises the mounting plate 101 projecting from the central portion 103 of the anti-rotation bar 66 for receiving the magnet 105. In some other examples, the magnet 105 is mounted to the central portion 103 (or any other part of the anti-rotation bar 66) in a recess in the central portion 103. The magnet 105 is optionally mounted to the anti-rotation bar 66 (whether in a recess or on the mounting plate 101) using glue or the attractive magnetic force of the magnet 105 against the ferrous anti-rotation bar 66.

It will be appreciated that the specific shape of the anti-rotation bar 66 and position of the slots 69, 70 can be adapted, provided that the anti-rotation bar 66 achieves the purpose of guiding axial movement of the threaded rod 62. Moreover, the specific location of the magnet 105 on the anti-rotation bar 66 and the way in which the magnet 105 is attached to the anti-rotation bar 66 may be adapted provided that the controller 44 is still able to determine when the punch portion 24 is in the home position based on interaction between the magnet 105 and home position sensor 45.

In some embodiments instead of mounting the magnet 105 on the anti-rotation bar 66 the magnet 105 can alternatively be mounted to another component which moves together with the threaded rod 62 during operation of the portable electric knockout punch 10, wherein the position of the home position sensor 45 is correspondingly adapted.

As already described in connection with step 906 (as shown in Figs 15 and 16) the threshold amount is realised when the number of motor turns determined to have occurred during reverse movement is within 25% of the number of motor turns which occurred during the hole forming operation. However there is flexibility in the specific distance implemented in practice provided the same overall functionality is achieved, for instance in some embodiments the threshold amount is realised in step 906 when the number of motor turns determined to have occurred during reverse movement reaches a specific percentage of the number of motor turns which occurred during the hole forming operation ranging between 75% to 95% (optionally between 85% to 95%) of the number of motor turns which occurred during the hole forming operation.

The concept of determining motor turn information in the context of brushed and brushless motors is already known so there is freedom for a designer to select a way of determining motor turn information when designing a portable electric knockout punch 10 which implements the invention described herein. Whether or not a brushless motor is used the controller 44 can determine the direction of rotation of the motor 46 based on whether the controller 44 is implementing a hole forming operation (in which case the motor 46 will be rotating in a first direction) or whether the controller 44 is implementing a reset stage of operation (in which case the motor 46 will be rotating in a second direction). It is mentioned here that in battery operated embodiments the motor 46 is configured to operate using DC current, whereas in mains operated embodiments the motor is configured to operate using AC current.

In some embodiments the angle between the first longitudinal axis A-A and the second longitudinal axis B-B may not be 90 degrees and instead may range between 45 degrees to 145 degrees, which is achievable by adjusting the angle at which the input pinion 52 and the bevel gear 53 of the bevel gear arrangement 49 mesh.

It has already been mentioned that by providing the motor 46 within the handle 18 leaves more space available within the tool housing 12 above the handle 18, whereby there is more freedom to position features of the portable electric knockout punch 10 in positions which improve weight distribution of internal features of the portable electric knockout punch 10. By providing the motor 46 only partially within the handle 18 achieves such an advantage to a lesser extent. By providing the motor 46 and also at least part of the transmission 50 within the handle 18 achieves such advantage to a greater extent. By providing the motor 46 and also the transmission 50 within the handle 18 achieves such an advantage to a fuller extent.

Referring to Fig. 8, in some embodiments the threaded rod 62 is fixed directly to punch portion 24 such as via a plug and socket-type attachment whereby one of the threaded rod 62 and the punch portion 24 plugs into the other, or via a threaded attachment arrangement whereby one of the threaded rod 62 and the punch portion 24 is threadably received by the other, or via an adhesive arrangement whereby the threaded rod 62 is bonded to the punch portion 24; in some embodiments the threaded rod 62 and punch portion 24 are welded together.

However, alternatively, in some other examples, an intermediate connector (not shown) is provided between the threaded rod 62 and the punch portion 24. Various suitable types of intermediate connector will be apparent to persons skilled in the art. For example, the intermediate connector has a first attachment portion for attaching to the punch portion 24 and also a second attachment portion for attaching to the threaded rod 62. The first attachment portion may be a plug and socket-type attachment arrangement for mating with an appropriately shaped part of the punch portion 24, or a threaded attachment arrangement for threadably engaging with part of the punch portion 24 or alternatively the first attachment portion may be attached to the punch portion 24 via adhesive or welding. Similarly, the second attachment portion may be a plug and socket-type attachment arrangement for mating with an appropriately shaped part of the threaded rod 62, or a threaded attachment arrangement for threadably engaging with the threaded rod 62 or alternatively the second attachment portion may be attached to the threaded rod 62 via adhesive or welding.

The embodiment of the tool 10 described in connection with Figs. 8 to 10 has an anti-rotation bar 66 for preventing rotation of the threaded rod 62. On the contrary the embodiment of the tool 210 described in connection with Figs. 12 and 13 omits an anti-rotation bar whereas rotation of the threaded rod 262 is prevented by configuring the punch portion 224 and support portion 222 of the hole forming mechanism 220 so as to permit relative axial movement between the punch portion 224 and support portion 222 but restrict rotational movement of the punch portion 224 and support portion 222 relative to each other; whereby in use the threaded rod 262 is able to move axially within the tool 210 but is restricted from rotating. It will be appreciated that in some embodiments the tool 10 can omit an anti-rotation bar 66 whereas rotation of the threaded rod 62 is prevented by cooperation between the punch portion 24 and support portion 22 of the hole forming mechanism 20 which permit relative axial movement but not relative rotational movement; wherein in such an embodiment the magnet 105 is fixed relative to the threaded rod 62 (directly or indirectly) such that it moves axially back-and-forth with the threaded rod 62 in use and its magnetic axis H-H aligns with the axis B-B so a Hall sensor can detect when the magnet moves across it as heretofore described for indicating when the punch portion 24 of the tool 10 has returned to the home position during a reset operation. Furthermore it will be appreciated that in some embodiments the tool 210 can have an anti-rotation bar for preventing rotation of the threaded rod 262; wherein operation of the tool 210 can be controlled in a manner similar to that described in connection with the tool 10.

In embodiments in which the portable electric knockout punch 10, 210 omits an anti-rotation bar 66, the magnet 105 is mounted to another suitable feature of the portable electric knockout punch 10, 210 which moves with the threaded rod 62, 262 and in some embodiments the magnet 105 is coupled to an axial extension at the rear of the threaded rod 62, 262.

As an alternative to the heretofore described magnet/Hall sensor way of determining that the punch portion 24 has arrived at the home position during a reset stage, a mechanical switch (not shown) may be provided within the portable electric knockout punch 10 whereby following a hole forming operation and upon initiation of reverse movement of the electric motor 46 for causing a reset stage of operation the controller 44 is configured to detect output from the mechanical switch indicative that the first or second arm 74, 76 of the anti-rotation bar 66 actuates the mechanical switch, thereby indicating that the punch portion 24 has returned to the home position; in other words step 910 may be implemented by the controller 44 determining that the anti-rotation bar 66 has engaged a mechanical switch. Alternatively, an optical sensor (not shown) may be provided within the portable electric knockout punch 10 which generates output based on the presence or absence of the anti-rotation bar 66 or threaded rod 62 wherein based on output from the optical sensor the controller 44 can determine when the punch portion 24 has returned to the home position; in other words step 910 may be implemented based on output from an optical sensor that the anti-rotation bar 66 or threaded rod 62 has reached a certain axial position.

## Claims

1. A portable electric knockout punch comprising:
an electric motor;
a hole forming mechanism having a support portion for cooperating with a die and a punch portion for cooperating with a stamp wherein the hole forming mechanism is operatively coupled to the electric motor for causing axial displacement of the punch portion relative to the support portion between a home position and an active position for forming a hole in sheet metal;
a home position sensor for generating output indicative that the punch portion has reached the home position during a reset stage of operation in which the punch portion is moved towards the home position; and
a controller for receiving motor turn information indicative of the number of turns of the electric motor and for controlling axial movement of the punch portion in use based only on the motor turn information and the output generated by the home position sensor.

2. The portable electric knockout punch of claim 1 wherein the controller determines that the punch portion has reached a maximum permissible axial position when the number of motor turns determined during movement of the punch portion away from the home position reaches a predetermined maximum number of motor turns stored in memory, whereby in response the controller stops the punch portion.

3. The portable electric knockout punch of claim 1 or 2 wherein the home position sensor is a Hall sensor mounted in a fixed position within the knockout punch which is configured to detect a magnet which is axially fixed relative to the punch portion.

4. The portable electric knockout punch of claim 3 wherein the Hall sensor generates a signal when exposed to magnetic flux from the magnet of one polarity but not when exposed to magnetic flux of the other polarity and the magnet is arranged so that as the magnet moves past the Hall sensor in use the Hall sensor generates a signal indicative that the punch portion has reached the home position during the reset stage of operation.

5. The portable electric knockout punch of any preceding claim wherein the controller is configured to control the motor to move the punch portion to the home position if in response to receiving a tool actuation signal the controller determines that the punch portion is not in the home position.

6. The portable electric knockout punch of any preceding claim wherein during the reset stage of operation, in which the punch portion is moved towards the home position, the controller is configured to decelerate the electric motor before the punch portion reaches the home position.

7. The portable electric knockout punch of claim 6 wherein during the reset stage of operation the controller is configured to drive the electric motor at a first target speed during a first portion of the reset stage of operation and to decelerate the electric motor upon determination by the controller that the punch portion is within a threshold distance from the home position, optionally wherein the threshold distance is reached when the punch portion has travelled at least 75% of the way back towards the home position.

8. The portable electric knockout punch of claim 7 wherein the first target speed is the maximum driving speed of the electric motor.

9. The portable electric knockout punch of claim 7 or 8 wherein the electric motor is decelerated to a second predetermined speed which is maintained until the controller subsequently determines that the punch portion is at the home position wherein in response the controller decelerates the motor to a stop, optionally wherein the second predetermined speed ranges between 50% to 80% of the first target speed.

10. The portable electric knockout punch of any of claims 7 to 9 wherein the controller is configured to determine when the punch portion is within the threshold distance from the home position when the number of motor turns determined during the reset stage of operation is within a threshold number of the number of motor turns determined during movement of the punch portion to the active position, optionally wherein the controller determines the punch portion is at the threshold distance from the home position when the number of motor turns determined to have occurred during the reset stage of operation is at least 75% of the number of motor turns determined to have occurred during movement of the punch portion to the active position.

11. The portable electric knockout punch of any preceding claim wherein the electric motor is a brushless motor and control circuitry thereof generates the motor turn information.

12. The portable electric knockout punch of any preceding claim further comprising at least one sensor for monitoring turns of the electric motor and for generating the motor turn information.

13. The portable electric knockout punch of any preceding claim wherein the electric motor has a motor shaft which is positioned 90 degrees relative to the axis along which the punch portion moves axially back-and-forth in use.

14. The portable electric knockout punch of any of claims 1 to 12 wherein the electric motor has a motor shaft which is parallel or coaxial with the axis along which the punch portion moves axially back-and-forth in use.
